# EUROPÄISCHE PATENTANMELDUNG

(11) **EP 0 582 783 A2**
(43) Veröffentlichungstag der Anmeldung: **16.02.1994**
(21) Anmeldenummer: 93107106.2
(22) Anmeldetag: 01.05.1993
(51) Int. Cl.: A61C 15/02

(54) **Gerät zum Reinigen von Interdentalräumen**

(30) Priorität: 15.07.1992 DE 4223195
(71) Anmelder: CORONET-Werke Gesellschaft mit beschränkter Haftung, D-69483 Wald-Michelbach (DE)
(72) Erfinder: Weihrauch, Georg, W-6948 Wald-Michelbach (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Ein Gerät zum Reinigen von Interdentalräumen, besteht aus einem biegsamen, monofilen Trägerdraht aus Metall oder Kunststoff, dessen Oberfläche mit Reinigungselementen versehen ist. Eine Verbesserung der Gebrauchseigenschaften des Gerätes ergibt sich dadurch, daß der Trägerdraht (1) wenigstens zur Doppellage unter Bildung wenigstens zweier Schenkel (2, 3) gebogen ist und an seinen freien Enden (5) eine Handhabe bildet.

## Beschreibung

Die Erfindung betrifft ein Gerät zum Reinigen von Interdentalräumen, bestehend aus einem biegsamen, monofilen Trägerdraht aus Metall oder Kunststoff, dessen Oberfläche mit Reinigungselementen versehen ist.

In der modernen Zahnpflege kommt der Reinigung der Interdentalräumen besondere Bedeutung zu, weil diese spaltartigen, zumeist engen Zwischenräume mit herkömmlichen Zahnbürsten - ob von Hand oder elektrisch betrieben - schwer zugänglich sind. Es kommt deshalb in den Zahnzwischenräumen zur Einlagerung von Speiseresten, Bildung von Zahnbelag, Karies etc. Eingelagerte Fremdkörper und Zahnbelag können wiederum zu Erkrankungen des Zahnfleisches, zu Paradontose etc. führen.

Geräte zum Reinigen der Interdentalräume sind in vielen Ausführungsformen bekannt. Hierzu gehört zunächst der herkömmliche Zahnstocher, mit dem sich jedoch allenfalls Speisereste entfernen lassen. Ferner findet sog. Zahnseide Verwendung, mit der auch eine Reinigungswirkung er-an den Zahnflächen zielt werden kann. Sie wird in den Zahnzwischenraum eingefädelt und hin und her gezogen, was jedoch umständlich und zeitraubend ist. Geräte zur Vereinfachung der Handhabung weisen einen bügelartigen Träger auf, zwischen dessen Enden die Zahnseide eingespannt ist (DE 90 03 517 U1). Auch hier ist die Handhabung und das Einspannen der Zahnseide umständlich. Zudem muß die Zahnseide von der Kaufläche her in den Interdentalraum eingeführt werden, was häufig gar nicht möglich ist, weil dort die Zähne dicht anliegen.

Um die Reinigungswirkung zu steigern, sind auch schon bürstenartige Geräte vorgeschlagen worden. So sind sog. gedrehte Bürsten bekannt (DE 31 28 749 A1), bei denen 749 ein Draht in Doppellage schraubenförmig gewendelt und zwischen den Wendeln Borsten eingespannt sind, wobei die Borstenlänge vom nutzungsseitigen Ende zu dem als Handhabe ausgebildeten freien Ende des gewendelten Drahtes zunimmt. Von Nachteil ist hierbei, daß der Tägerdraht zumindest bereichsweise freiliegt und sich aufgrund der Wendelung in engen Zahnzwischenräumen verklemmen kann. Aufgrund der Doppellage und der Wendelung weist der Draht einen relativ großen Querschnitt auf, der durch die beim Einführen sich umlegenden Borsten noch vergrößert wird. Für enge Zahnzwischenräume ist daher dieses Gerät nicht geeignet. Eine Verringerung des Querschnittes läßt sich durch einfache monofile drahtförmige Träger erreichen (US 3 698 405 A, EP 354 352 A1), die an ihrem Umfang mit abrasivem Material beschichtet oder auch mit Kunststoffborsten beflockt sind (EP 277 156 B1). Sollen mit einem solchen Gerät auch engste Spalte erreicht werden, muß der Querschnitt entsprechend minimiert werden. Geschieht dies über die gesamte Länge des Trägerdrahtes, so weist er keine ausreichende Biegesteifigkeit auf und es wird dadurch das Einführen erschwert. Reduziert man den Querschnitt zum Nutzungsende hin, läßt also beispielsweise den Trägerdraht spitz zulaufen, so erhöht sich die Verletzungsgefahr und lassen sich an den Zahnflanken nicht mehr die notwendigen Reinigungskräfte aufbringen. Auch ist die wirksame Länge für das Reinigen reduziert.

Der Erfindung liegt die Aufgabe zugrunde, ein Gerät des eingangs geschilderten Aufbaus so auszubilden, daß auch engste Zahnzwischenräume zugänglich sind, gleichwohl eine ausreichende Reinigungswirkung auf die Zahnflanken ausgeübt werden kann, ohne daß das Einführen des Gerätes in den Zahnzwischenraum erschwert wird oder eine Verletzungsgefahr zu fürchten ist.

Diese Aufgabe wird erfindungsgemäß dadurch gelöst, daß der Trägerdraht wenigstens zur Doppellage unter Bildung wenigstens zweier Schenkel gebogen ist und an seinen freien Enden eine Handhabe bildet.

Durch den in Doppellage liegenden Trägerdraht ergibt sich in der den beiden Schenkeln gemeinsamen Ebene ein relativ hohes Widerstandsmoment gegen Biegekräfte, während dieses Widerstandsmoment quer zu der Ebene beider Schenkel erheblich geringer ist. Dadurch ist es möglich, das Gerät problemlos in den Zahnzwischenraum so einzuführen, daß die Ebene der Schenkel parallel zu den Zahnflanken liegt und beim Einführen die Schenkel nur in einer Richtung, nämlich quer zur Schenkelebene ausweichen können. Dadurch und durch den abgerundeten Biegescheitel der beiden Schenkel, mit denen das Gerät vorweg in den Interdentalraum eingeführt wird, ist dieses Einführen problemlos möglich. Aufgrund des größeren Widerstandsmomentes parallel der Zahnflanken kann das Gerät bis in engste Spalten ohne frühzeitiges Abbiegen hineingeführt werden. Auf der anderen Seite lassen sich die Schenkel quer zu ihrer Ebene abbiegen, der Trägerdraht mit den Reinigungselementen beim Hin- und Herfahren also um die Zahnflanken abbiegen und dadurch eine intensive Reinigungswirkung an den Zahnflanken entfalten. Auf diese Weise kann das erfindungsgemäß ausgebildete Gerät mit einem minimalen Querschnitt für den Trägerdraht ausgestattet sein.

Die erfindungsgemäße Ausbildung läßt eine vielgestaltige Formgebung zu. So kann der Trägerdraht nach Art einer Haarnadel gebogen sein, wobei die wenigstens zwei Schenkel im wesentlichen linear und parallel verlaufen können.

Statt dessen ist es auch möglich, die Schenkel in der ihnen gemeinsamen Ebene zu wellen, wobei die Wellen parallel verlaufen oder gegeneinander gerichtet sein können. Auch können lineare und gewellte Abschnitte kombiniert sein.

Bei einer abgewandelten Ausführungsform verlaufen die beiden Schenkel von dem Biegungsscheitel zunächst divergierend und dann zu den ihren freien Enden konvergierend. Hierdurch ergibt sich eine zusätzliche Elastizität in Spaltrichtung des Interdentalraums.

In weiterer Abwandlung der Erfindung kann vorgesehen sein, daß der Trägerdraht zur Vierfachlage unter Bildung von vier in einer Ebene liegenden Schenkeln gebogen ist. Hierdurch läßt sich die Biegesteifigkeit parallel zu den Zahnflanken weiter erhöhen, während der Trägerdraht quer dazu im wesentlichen gleiche Biegesteifigkeit aufweist, wie bei einer zweilagigen Ausführung.

Bei einer vierlagigen Ausführung liegen die beiden Biegescheitel der Schenkel an den der Handhabe gegenüberliegenden Enden vorzugsweise auf einer etwa senkrecht zur Erstreckung der Schenkel verlaufenden Gerade, so daß beim Einführen beide Biegescheitel gleichzeitig in den Zahnzwischenraum eintreten. Der der Handhabe zugekehrte Biegescheitel der beiden inneren Schenkel kann mit Abstand von der Handhabe angeordnet sein, insbesondere können die freien Enden des Trägerdrahtes zur Handhabe hin zusammengeführt sein.

Der Trägerdraht kann konstanten Kreisquerschnitt aufweisen, jedoch läßt sich der Querschnitt minimieren, wenn der Trägerdraht einen abgeflachten Querschnitt mit einer in der Ebene der Schenkel größeren Ausdehnung als quer dazu aufweist. In diesen Fall kann der Trägerdraht aus flachgewalztem Runddraht gebildet sein.

In weiterer Abwandlung kann vorgesehen sein, daß die Ausdehnung des Trägerdrahtes quer zur Ebene der Schenkel von dem Biegescheitel zur Handhabe zunimmt, so daß er im Bereich der Handhabe die größte Steifigkeit besitzt.

Wie schon angedeutet, kann der Trägerdraht mit Borsten oder Fasern aus Kunststoff beflockt oder mit abrasiven Partikeln beschichtet sein; auch ist eine Kombination beider Arten von Reinigungselementen möglich. Schließlich können die freien Enden des Trägerdrahtes zur Erleichterung der Handhabung miteinander verbunden, gegebenenfalls auch zusätzlich und gemeinsam beschichtet sein, um eine größere Grifffläche zu bieten. Ferner können die freien Enden so ausgebildet sein, daß sie beispielsweise in die Halterung eines motorgetriebenen Handstücks eingesetzt werden können.

Nachstehend ist die Erfindung anhand einiger in der Zeichnung wiedergegebener Ausführungsbeispiele beschrieben.
In der Zeichnung zeigen:
- Figur 1: eine erste Ausführungsform in Ansicht;
- Figur 2: verschiedene Querschnittsformen des Trägerdrahtes und
- Figuren 3 - 7: verschiedene weitere Ausführungsformen des Gerätes in Ansicht.

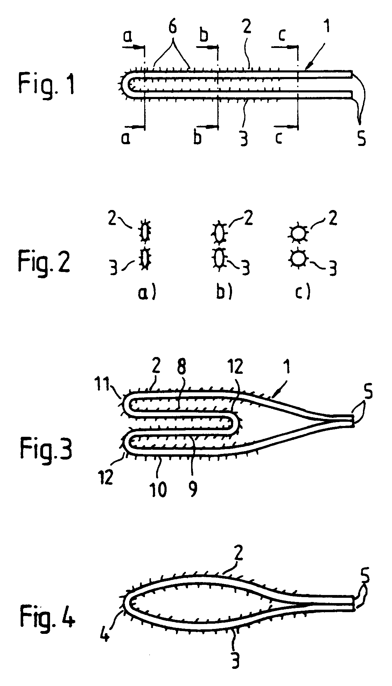

Das Gerät zur Reinigung von Interdentalräumen besteht aus einen Trägerdraht 1, der in der einfachsten Ausführung zur Doppellage unter Bildung eines Biegescheitels 4 und zwei Schenkeln 2,3 abgebogen ist. Gegenüber dem Biegescheitel 4 bilden die freien Enden 5 der Schenkel 2,3 eine Handhabe zum Greifen des Gerätes. Der Trägerdraht ist zumindest auf einem Teil seiner Länge mit Reinigungselementen 6 besteht, z. B. mit kurzgeschnittenen Borsten oder Fasern beflockt. Der Querschnitt des Trägerdrahtes kann grundsätzlich beliebig sein. In Figur 2 sind anhand der Schnitte a-a,b-b und c-c verschiedene Querschnittsformen wiedergegeben. Mit Vorteil ist der Querschnitt im Bereich des Biegescheitels 4 quer zur Ebene der Schenkel 2,3 am schmalsten, während er zu den freien Enden 5 hin zunehmen kann. Beim gezeigten Ausführungsbeispiel ist der Trägerdraht als Runddraht ausgebildet, der von der Handhabe ausgehend nach vorne zunehmend flachgewalzt ist. Statt dessen kann der in Figur 2a) gezeigte flache Querschnitt sich auch über die gesamte Länge erstrecken.

Ebenso kann der Trägerdraht 1 natürlich auch über den gesamten Querschnitt kreisförmig ausgebildet sein, wie in Figur 2c) gezeigt.

Bei der Ausführungsform gemäß Figur 3 ist der Trägerdraht 1 unter Bildung von vier etwa parallelen Schenkeln 7, 8, 9 und 10 mehrfach abgebogen, wobei die Biegescheitel 11, 12 der beiden Schenkel 7, 8 bzw. 9, 10 etwa auf einer Geraden liegen, die senkrecht zur Erstreckung der Schenkel verläuft, während der die beiden inneren Schenkel 8, 9 verbindende Biegescheitel 12 mit Abstand von der Handhabe angeordnet ist, so daß die freien Enden 5 des Trägerdrahtes 1 zur Handhabe hin zusammengeführt werden können.

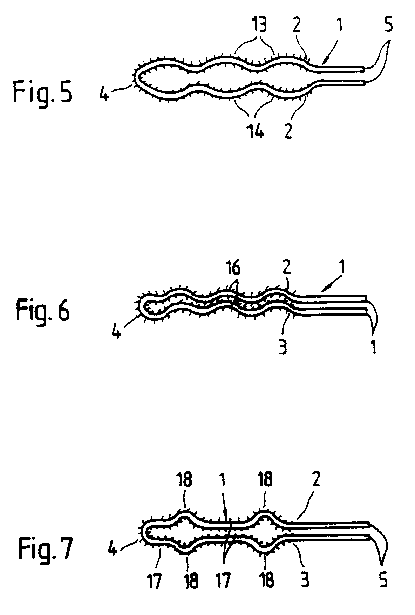

Beim Ausführungsbeispiel gemäß Figur 4 verlaufen die Schenkel 1,2 vom Biegescheitel 4 ausgehend zunächst divergierend und anschließend wieder konvergierend zu den freien Enden 5 hin. Bei dieser Ausführungsform können die Schenkel 1,2 in der ihnen gemeinsamen Ebene federn.

Die Ausführungsform gemäß Figur 5 weist einen Trägerdraht 1 auf, der mehrfach gewellt ist, wobei die Wellen 13, 14 der beiden Schenkel 1,2 einander entgegengerichtet sind.

Figur 6 zeigt ein ähnliches Ausführungsbeispiel, wobei die Wellen 15,16 des Trägerdrahtes 1 jedoch parallel zueinander verlaufen. Beim Ausführungsbeispiel gemäß Figur 7 weisen die Schenkel 2,3 des Trägerdrahtes 1 abwechselnd lineare und parallele Abschnitte 17 einerseits und wellenförmige Abschnitte 18 andererseits auf.

Die freien Enden 5 des Trägerdrahtes 1 können miteinander verbunden, z. B. verklebt, verschweißt oder gemeinsam umhüllt sein. Sie können ferner ein aufgesetztes Griffstück aufweisen, wie sie andererseits auch als Halterung zum Einstecken in ein Handstück ausgebildet sein können.

## Patentansprüche

1. Gerät zum Reinigen von Interdentalräumen, bestehend aus einem biegsamen, monofilen Trägerdraht aus Metall oder Kunststoff, dessen Oberfläche mit Reinigungselementen versehen ist, dadurch gekennzeichnet, daß der Trägerdraht (1) wenigstens zur Doppellage unter Bildung wenigstens zweier Schenkel (2, 3) gebogen ist und an seinen freien Enden (5) eine Handhabe bildet.

2. Gerät nach Anspruch 1, dadurch gekennzeichnet, daß der Trägerdraht (1) nach Art einer Haarnadel gebogen ist.

3. Gerät nach Anspruch 1 oder 2, dadurch gekennzeichnet, daß die wenigstens zwei Schenkel (2, 3) im wesentlichen linear und parallel verlaufen.

4. Gerät nach Anspruch 1 oder 2, dadurch gekennzeichnet, daß die wenigstens zwei Schenkel (2, 3) in der ihnen gemeinsamen Ebene gewellt sind.

5. Gerät nach einem der Ansprüche 1 bis 4, dadurch gekennzeichnet, daß die wenigstens zwei Schenkel (2, 3) lineare und gewellte Abschnitte (17, 18) aufweisen.

6. Gerät nach Anspruch 1 oder 2, dadurch gekennzeichnet, daß die beiden Schenkel (2, 3) von dem Biegungsscheitel (4) zunächst divergierend und dann zu ihren freien Enden (5) konvergierend verlaufen.

7. Gerät nach einem der Ansprüche 1 bis 5, dadurch gekennzeichnet, daß der Trägerdraht (1) zur Vierfachlage unter Bildung von vier in einer Ebene liegenden Schenkeln (7, 8, 9, 10) gebogen ist.

8. Gerät nach Anspruch 7, dadurch gekennzeichnet, daß die beiden Biegescheitel (11, 12) der Schenkel (7, 8, 9, 10) an den der Handhabe gegenüberliegenden Enden auf einer etwa senkrecht zur Erstreckung der Schenkel verlaufenden Gerade liegen.

9. Gerät nach Anspruch 7 oder 8, dadurch gekennzeichnet, daß der der Handhabe zugekehrte Biegescheitel (12) der beiden inneren Schenkel (8, 9) mit Abstand von der Handhabe angeordnet ist.

10. Gerät nach einem der Ansprüche 1 bis 9, dadurch gekennzeichnet, daß der Trägerdraht (1) einen konstanten Kreisquerschnitt aufweist.

11. Gerät nach einem der Ansprüche 1 bis 9, dadurch gekennzeichnet, daß der Trägerdraht (1) einen abgeflachten Querschnitt mit einer in der Ebene der Schenkel (2, 3) größeren Ausdehnung als quer dazu aufweist.

12. Gerät nach Anspruch 10, dadurch gekennzeichnet, daß der Trägerdraht (1) aus flachgewalztem Runddraht gebildet ist.

13. Gerät nach Anspruch 11 oder 12, dadurch gekennzeichnet, daß die Ausdehnung des Trägerdrahtes (1) quer zur Ebene der Schenkel (2, 3) von dem Biegescheitel (4) zur Handhabe zunimmt.

14. Gerät nach einem der Ansprüche 1 bis 13, dadurch gekennzeichnet, daß der Trägerdraht (1) mit Borsten (6) oder Fasern aus Kunststoff beflockt ist.

15. Gerät nach einem der Ansprüche 1 bis 14, dadurch gekennzeichnet, daß der Trägerdraht (1) mit abrasiven Partikeln beschichtet ist.
